# EUROPÄISCHE PATENTSCHRIFT

(11) **EP 1 099 576 B1**
(45) Veröffentlichungstag und Bekanntmachung des Hinweises auf die Patenterteilung: **27.08.2008**
(21) Anmeldenummer: 00123971.4
(22) Anmeldetag: 03.11.2000
(51) Int. Cl.: B60G 3/20, B60G 7/02, B60G 15/00

(54) **Anordnung einer Radaufhängung**
Wheel suspension assembly
Ensemble de suspension de roue

(30) Priorität: 12.11.1999 DE 19954412
(43) Veröffentlichungstag der Anmeldung: 16.05.2001
(73) Patentinhaber: AUDI AG, 85045 Ingolstadt (DE)
(72) Erfinder: Friedrich, Killian, 85122 Hitzhofen (DE)

(56) Entgegenhaltungen:
- DE-A- 19 751 754
- FR-A- 2 777 224
- GB-A- 2 270 508
- US-A- 5 280 957

## Beschreibung

Die Erfindung betrifft die Anordnung einer Radaufhängung für gelenkte Räder eines Kraftfahrzeuges, gemäss dem Oberbegriff des Patentanspruches 1.

Eine derartige Anordnung einer Radaufhängung zeigt die EP 0 201 082 B1, bei der das Federbein aufbauseitig an einem Aufnahmeteil elastisch gelagert ist und an diesem Aufnahmeteil ferner die Lenkerlager eines oberen Querlenkers der Radaufhängung angeordnet sind. Die Aufnahmeteile sind starr mit dem Aufbau des Kraftfahrzeuges verschraubt. Vorteilhaft an dieser Anordnung ist, dass die Radaufhängung als eine Montageeinheit in das Kraftfahrzeug montierbar ist und dass die Abstützung des Federbeines einerseits und die Anlenkung der Lenkerlager andererseits hinsichtlich der auftretenden Kräfte und Momente getrennt voneinander ausgeführt sind. Jedoch ist die Auslegung der Lagerkennungen der Lenkerlager der oberen Querlenker kompromissbehaftet, da eine weiche Kennung zwar hervorragend geräuschisolierend und dämpfend wirkt, hinsichtlich einer exakten Radführung aber eine eher harte Kennung zu bevorzugen wäre.

FR 2 777 224 offenbart einen Querlenker, der durch separate Aufnahmeteile angelenkt ist, wobei die Aufnahmeteile über elastische Lager mit Aufban des Kraftfahrzeuges verbunden sind.

Aufgabe der Erfindung ist es, eine Anordnung der gattungsgemäßen Art vorzuschlagen, die sowohl hervorragend geräuschisolierend und dämpfend ausgelegt und eine besonders exakte Radführung sicherstellt.

Diese Aufgabe wird erfindungsgemäß mit den kennzeichnenden Merkmalen des Patentanspruches 1 gelöst. Vorteilhafte Weiterbildungen der Erfindung sind den weiteren Patentansprüchen entnehmbar.

Erfindungsgemäß werden das Lenkgetriebe und die Aufnahmeteile zu einer starren Einheit verbunden, an der die Lenkerlager bevorzugt mit relativ harter Kennung angelenkt sind, während das Federbein an einer Ausnehmung der Aufnahmeteile vorbei unmittelbar mit dem Aufbau verbunden wird. Daraus resultiert eine exakte Radführung. Aufgrund der elastischen Lagerung der Aufnahmeteile mit dem starr angebautem Lenkgetriebe am Aufbau des Kraftfahrzeuges wird trotz der harten Kennung der Lenkerlager eine hervorragende Geräuschisolierung erzielt, weil diese elastischen Lager entsprechend weich ausgeführt sein können.

Die Ausnehmung in den Aufnahmeteilen kann bevorzugt geschlossen und im wesentlichen kreisförmig ausgeführt sein, wodurch in baulich besonders günstiger Ausführung das Federbein durch die Aufnahmeteile hindurchgeführt ist. Dabei ist das Federbein für sich elastisch mit dem Aufbau verbunden und bilden die Aufnahmeteile in starrer Verbindung mit dem Lenkgetriebe eine weitere, elastisch aufgehängte Funktionseinheit.

Die Verbindung des Lenkgetriebes mit den Aufnahmeteilen sollte in Längsund Querebene des Kraftfahrzeuges betrachtet starr ausgeführt sein, so dass eine besonders steife Funktionseinheit gebildet ist. Ist das Lenkgetriebe dabei nach unten abnehmbar an den Aufnahmeteilen angeordnet, so ist beispielsweise bei Reparaturen ein einfacher Ausbau des Lenkgetriebes sichergestellt.

Weitere zweckmäßige und vorteilhafte Ausbildungen der Erfindung sind der nachfolgenden Beschreibung eines Ausführungsbeispieles entnehmbar. Die schematische Zeichnung zeigt in
- Fig. 1: den oberen Bereich einer Radaufhängung für Kraftfahrzeuge mit gelenkten Rädern in einer raumbildlichen Ansicht von unten, mit einem Federbein, zwei aufgelösten oberen Lenkern zur Radführung, einem linksseitigen Aufnahmeteil und einem teilweise dargestellten Zahnstangen-Lenkgetriebe; und
- Fig. 2: eine weitere raumbildliche Ansicht der linksseitigen Radaufhängung gemäß Fig. 1 von schräg oben.

Die Anordnung der Radaufhängung 10 zeigt im wesentlichen ein Federbein 12, zwei aufgelöste Lenker 14,16, die funktionell einen oberen Querlenker bilden, ein längliches Aufnahmeteil 18 und ein mit dem Aufnahmeteil 18 starr verbundenes Zahnstangen-Lenkgetriebe 20. Gezeigt ist dabei die linke Seite der Radaufhängung 10, die rechte Seite ist sich spiegelbildlich gleich vorzustellen.

Die Lenker 14,16 sind über aufbauseitige Lenkerlager (herkömmliche Gummi-Metall-Hülsenlager oder hydraulisch gedämpfte Gummi-Metall-Lager) 22,24 an den Aufnahmeteilen 18 angelenkt; die andernends vorgesehenen Kugelgelenke 26,28 sind mit einem nicht dargestellten Radträger verbunden.

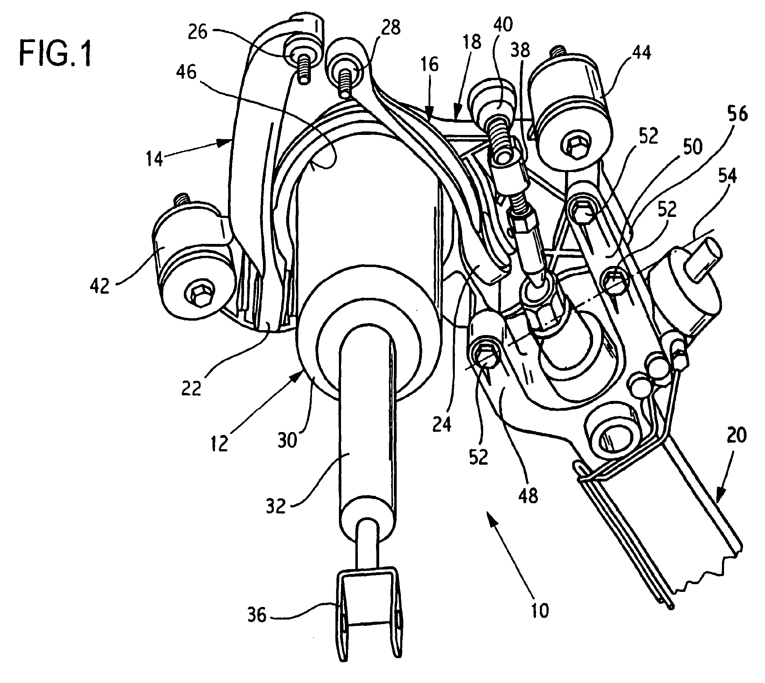

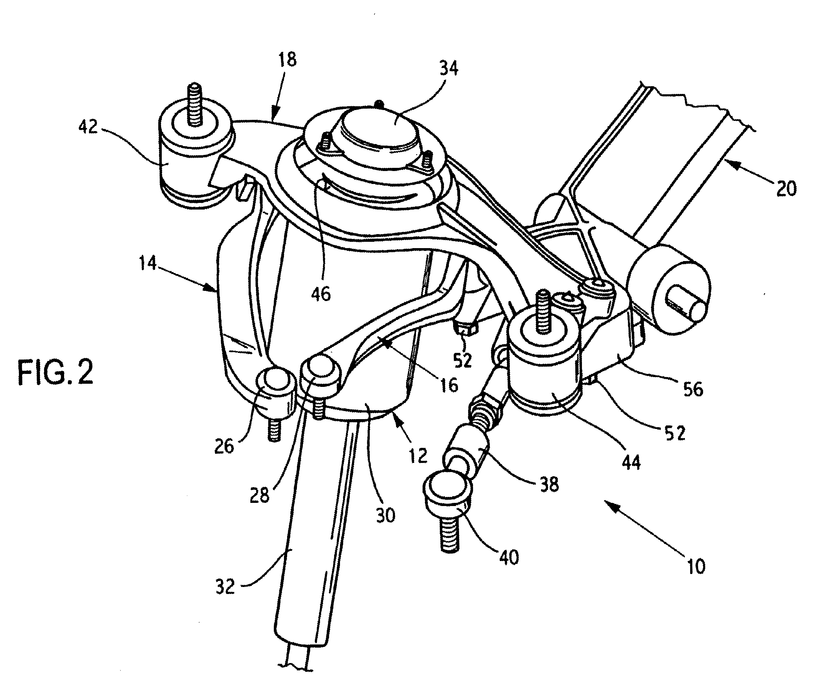

Das Federbein 12, das eine Baueinheit aus einer Tragfeder 30 und einem Teleskop-Stoßdämpfer 32 bildet, ist oben über ein elastisches Lager 34 (vgl. Fig. 2) an dem nicht dargestellten Aufbau des Kraftfahrzeuges abgestützt, während dessen untere Befestigungsschelle 36 (Fig. 1) mit einem unteren Querlenker der Radaufhängung 10 verbindbar ist.

An den Aufnahmeteilen 18, die im wesentlichen in Längsrichtung des Kraftfahrzeuges ausgerichtet sind, ist in etwa senkrecht dazu in Querrichtung des Kraftfahrzeuges verlaufend das Lenkgetriebe 20 von unten befestigt, dessen Spurstangen 38 (es ist nur die linke Spurstange ersichtlich) über Kugelgelenke 40 an den nicht dargestellten Lenkarmen der Radträger der Radaufhängung 10 angelenkt sind.

Die Aufnahmeteile 18, z. B. aus einer Aluminiumlegierung oder einem Stahl-Blechpressteil hergestellt, sind über jeweils zwei gummielastische Lager 42,44 schwingungsisoliert mit dem Aufbau des Kraftfahrzeuges verbunden. Dabei liegen diese Lager 42,44 in etwa in Längsrichtung des Kraftfahrzeuges hintereinander und wie die Lenkerlager 22,24 beiderseits des Federbeines 12. Die Federbeine 12 erstrecken sich jeweils durch eine geschlossene, kreisförmige Ausnehmung 46 in den Aufnahmeteilen 18.

Die Aufnahmeteile 18 und das Lenkgetriebe 20 bilden eine starre, für sich elastisch aufgehängte U-förmige Funktionseinheit, die über die Spurstange 38 und die Lenker 14,16 mit der übrigen, nicht dargestellten Radaufhängung 10 radführend verbunden sind. Dabei kann die Kennung der elastischen Lager 42,44 relativ weich und damit schwingungs- und geräuschisolierend ausgelegt sein, während die Kennung der Lenkerlager 22,24 zur Erzielung einer exakten Radführung relativ hart ausgeführt ist.

Zur Herstellung einer in sich starren und biegesteifen Funktionseinheit ist das Lenkgetriebe 20 mit konsolenartigen Armen 48,50 mittels jeweils drei Schrauben 52 mit hinteren Abschnitten 56 der Aufnahmeteile 18 verschraubt, wobei die Schrauben 52 dreieckförmig ausgerichtet sind, mit in Längsrichtung und in Querrichtung des Kraftfahrzeuges verlaufenden, gedachten Verbindungsgeraden 54. Die Arme 48,50 liegen unterhalb der korrespondierenden unteren Abschnitte 56, so dass das Lenkgetriebe 20 nach Lösen der Verbindungen über die Kugelgelenke 40 und nach entfernen der Schrauben 52 nach unten ausbaubar bzw. von unten einbaubar ist.

## Patentansprüche

1. Anordnung einer Radaufhängung für gelenkte Räder eines Kraftfahrzeuges, mit je Seite einem Federbein, zumindest einem Querlenker mit zwei aufbauseitigen Lenkerlagern und einem Zahnstangen-Lenkgetriebe, wobei die Federbeine am Aufbau abgestützt sind, **gekennzeichnet, durch** die folgenden Merkmale:
- jeder Querlenker (14,16) ist an einem separaten Aufnahmeteil (18) angelenkt,
- die Aufnahmeteile (18) sind jeweils über zumindest zwei elastische Lager (42,44) mit dem Aufbau verbunden;
- die Federbeine (12) durchdringen Ausnehmungen (46) in den Aufnahmeteilen (18) und sind separat über eine Abstützung (Lager 34) am Aufbau angelenkt;
- das Lenkgetriebe (20) ist an den Aufnahmeteilen (18) diese starr miteinander verbindend befestigt.

2. Anordnung nach Anspruch 1, **dadurch gekennzeichnet, dass** die aufbauseitigen Lenkerlager (22,24) und die elastischen Lager (42,44) der Aufnahmeteile (18) jeweils beiderseits der Federbeine (12) liegen.

3. Anordnung nach Anspruch 1 oder 2, **dadurch gekennzeichnet, dass** die Lenkerlager (42,44) in ihrer Kennung relativ hart ausgelegt sind.

4. Anordnung nach einem oder mehreren der vorhergehenden Ansprüche, **dadurch gekennzeichnet, dass** die Ausnehmung eine geschlossene, im wesentlichen kreisförmige Ausnehmung (46) ist.

5. Anordnung nach einem oder mehreren der vorhergehenden Ansprüche, **dadurch gekennzeichnet, dass** das Lenkgetriebe (20) im Bereich der im Kraftfahrzeug hinten liegenden Lager (44) der Aufnahmeteile (18) an den Aufnahmeteilen (18) befestigt ist.

6. Anordnung nach einem oder mehreren der vorhergehenden Ansprüche, **dadurch gekennzeichnet, dass** das Lenkgetriebe (20) nach unten abnehmbar an den Aufnahmeteilen (18) befestigt ist.

7. Anordnung nach einem oder mehreren der vorhergehenden Ansprüche, **dadurch gekennzeichnet, dass** je Seite zumindest drei Befestigungsschrauben (52) vorgesehen sind, die in Draufsicht gesehen dreieckförmig ausgerichtet die Befestigungsstelle zwischen Aufnahmeteilen (18) und Lenkgetriebe (20) in Fahrzeugquer- und -längsrichtung aussteifen.

8. Anordnung nach einem oder mehreren der vorhergehenden Ansprüche, **dadurch gekennzeichnet, dass** die elastischen Lager (42,44) der Aufnahmeteile (18) in etwa in Fahrzeuglängsrichtung hintereinander liegen.

## Claims

1. Wheel suspension assembly for the steered wheels of a motor vehicle with a strut, at least one suspension arm with two steering bearings on the body side and a toothed rod steering gear on each side, in which the struts are supported on the body, **characterised by** the following characteristics:
- each suspension arm (14, 16) is articulated on a separate receiving part (18),
- the receiving parts (18) are each connected to the body through at least two elastic bearings (42, 44);
- the struts (12) penetrate recesses (46) in the receiving parts (18) and are articulated separately through a support (bearing 34) on the body;
- the steering gear (20) is fastened to the receiving parts (18) and connected rigidly to them.

2. Assembly according to claim 1, **characterised in that** the steering bearing on the body side (22, 24) and the elastic bearings (42, 44) of the receiving parts (18) are each on both sides of the struts (12).

3. Assembly according to claim 1 or 2, **characterised in that** the steering bearings (42, 44) are designed so that their characteristics are relatively hard.

4. Assembly according to one or several of the previous claims, **characterised in that** the recess is a closed, essentially circular recess (46).

5. Assembly according to one or several of the previous claims, **characterised in that** the steering gear (20) is fastened to the receiving parts (18) in the area of the bearings (44) of the receiving parts (18) located in the rear of the vehicle.

6. Assembly according to one or several of the previous claims, **characterised in that** the steering gear (20) is fastened to the receiving parts (18) so that it can be removed downwards.

7. Assembly according to one or several of the previous claims, **characterised in that** at least three fastening screws (52) are provided on each side, which stiffen the fastening points between the receiving parts (18) and steering gear (20) in the crosswise and longitudinal direction of the vehicle, arranged in the shape of a triangle when seen from above.

8. Assembly according to one or several of the previous claims, **characterised in that** the elastic bearings (42, 44) of the receiving parts (18) are behind each other more or less in the longitudinal direction of the vehicle.

## Revendications

1. Ensemble d'une suspension pour des roues directrices d'un véhicule automobile, avec de chaque côté une jambe de suspension, au moins un bras oscillant transversal doté de deux paliers de bras oscillant côté structure et un mécanisme de direction à crémaillère, les jambes de suspension étant en appui sur la structure, **caractérisé par** les caractéristiques suivantes :
- chaque bras oscillant transversal (14, 16) est articulé à une partie de réception (18) séparée ;
- les parties de réception (18) sont reliées respectivement à la structure par au moins deux paliers (42, 44) élastiques ;
- les jambes de suspension (12) traversent des évidements (46) dans les parties de réception (18) et sont articulées séparément à la structure par un appui (palier 34) ;
- le mécanisme de direction (20) est fixé sur les parties de réception (18) en les reliant solidement entre elles.

2. Ensemble selon la revendication 1, **caractérisé en ce que** les paliers de bras oscillant (22, 24) côté structure et les paliers (42, 44) élastiques des parties de réception (18) se trouvent respectivement de part et d'autre des jambes de suspension (12).

3. Ensemble selon la revendication 1 ou 2, **caractérisé en ce que** les paliers de bras oscillant (42, 44) sont configurés de manière relativement dure dans leur caractéristique.

4. Ensemble selon l'une ou plusieurs quelconques des revendications précédentes, **caractérisé en ce que** l'évidement est un évidement (46) fermé, essentiellement circulaire.

5. Ensemble selon l'une ou plusieurs quelconques des revendications précédentes, **caractérisé en ce que** le mécanisme de direction (20) est fixé dans la zone des paliers (44) des parties de réception (18) se trouvant à l'arrière dans le véhicule automobile, sur les parties de réception (18).

6. Ensemble selon l'une ou plusieurs quelconques des revendications précédentes, **caractérisé en ce que** le mécanisme de direction (20) est fixé de manière amovible vers le bas sur les parties de réception (18).

7. Ensemble selon l'une ou plusieurs quelconques des revendications précédentes, **caractérisé en ce qu'**au moins trois vis de fixation (52) qui renforcent le point de fixation entre les parties de réception (18) et le mécanisme de direction (20) dans le sens transversal et longitudinal du véhicule sont prévues, vu en élévation, alignées en triangle de chaque côté.

8. Ensemble selon l'une ou plusieurs quelconques des revendications précédentes, **caractérisé en ce que** les paliers (42, 44) élastiques des parties de réception (18) se trouvent l'un derrière l'autre à peu près dans le sens longitudinal du véhicule.
